# EUROPEAN PATENT APPLICATION

(11) **EP 1 768 057 A1**
(43) Date of publication of application: **28.03.2007**
(21) Application number: 05748080.8
(22) Date of filing: 07.06.2005
(51) Int. Cl.: G06Q 10/00

(54) **ELECTRONIC SETTLEMENT SYSTEM, PORTABLE TELEPHONE, NONCONTACT IC CARD READER, AND PERSONAL IDENTIFICATION DATA SAMPLER**

(30) Priority: 07.06.2004 JP 2004168197
(71) Applicant: MATSUSHITA ELECTRIC INDUSTRIAL CO., LTD., Kadoma-shi, Osaka Osaka 571-0051 (JP)
(72) Inventor: SAWAMURA, Kouji c/o Matsushita El. Ind. Co., Ltd, Chuo-ku, Osaka-shi, Osaka 540-6319 (JP)
(74) Representative: Balsters, Robert
(86) International application number: PCT/JP2005/010753
(87) International publication number: WO 2005/122035

(57) **Abstract**

An electronic settlement system includes a portable telephone (102) mounted with a noncontact IC card means and a fingerprint verification means, a noncontact IC card reader (105), and a fingerprint sampler (106) connected with the noncontact IC card reader (105). User's fingerprint data is sampled using the fingerprint sampler (106) and transmitted from the noncontact IC card reader (105) to the portable telephone (102). Portable telephone (102) makes the fingerprint verification means compare the sampled fingerprint data with fingerprint data prestored for verification and transmit the verification result to the noncontact IC card reader (105). Noncontact IC card reader (105) performs electronic settlement based on the received verification result, thereby ensuring security and reliability when the user purchases an article of commerce.

## Description

### TECHNICAL FIELD

The present invention relates to an electronic settlement system which uses a portable telephone and is based on noncontact communication and personal identification.

### BACKGROUND ART

There have been services based on electronic settlement systems which allow the user to access the Internet through a terminal such as a personal computer or a portable telephone. In these systems, the user orders an article of commerce by accessing the server on the Internet through a portable telephone or the like and makes settlement by entering his/her credit card number and other personal information into the portable telephone or the like.

There are also prepaid electronic settlement systems that allow the user to pre-charge his/her portable telephone with electronic money and to purchase an article of commerce by using his/her portable telephone as a so-called electronic purse.

There are other electronic settlement systems that allow the user to use his/her biometric data such as a fingerprint or an iris pattern for security improvement.

An example of the electronic settlement systems is disclosed in Japanese Patent Unexamined Publication No.2001-34544. This system includes a fingerprint input section for inputting fingerprint data into the portable telephone, an IC card having the user's fingerprint information, and a function for comparing the fingerprint data with each other. The system allows the user to make settlement only when both data agree with each other.

Another example of the electronic settlement systems is disclosed in Japanese Patent Unexamined Publication No. 2002-14742. In this system, the user uses a portable telephone mounted with an IC card having the user's fingerprint information. The shop, on the other hand, is equipped with an automatic checker for sampling the user's fingerprint and comparing it with the fingerprint data received from the portable telephone by noncontact communication. The user can make settlement when the compared data agree with each other.

These conventional techniques, however, have the following problems.

In the technique shown in Japanese Patent Unexamined Publication No.2001-34544, the sampling and verification of a fingerprint and settlement are performed in the portable telephone. The fingerprint identification process and the settlement process are linked to each other by demanding the portable telephone to perform a long series of operations such as selecting a fingerprint identification function and inputting a fingerprint.

Moreover, mounting a fingerprint identification sensor on the portable telephone affects the performance of the portable telephone by causing the fingerprint identification section to break down or to have variations in performance depending on the type of portable telephone.

Thus making the portable telephone perform a series of the settlement process including fingerprint identification enables the user to make settlement whenever and anywhere. However, at the same time, it makes both the user and the shop concern about unauthorized use such as the fraudulent conversion of the portable telephone or forgery of fingerprint data.

On the other hand, in the technique of Japanese Patent Unexamined Publication No.2002-14742, fingerprint verification is performed by the automatic checker installed in the shop or the like. Since fingerprint data for verification is transmitted from the user's portable telephone to the automatic checker under third-party management, the fingerprint data, which is personal information, may be leaked from the automatic checker.

### SUMMARY OF THE INVENTION

To solve the aforementioned problems, the electronic settlement system of the present invention ensures the system security by making a fingerprint sampler installed in a shop sample the user's fingerprint and making the user's portable telephone verify the fingerprint, thereby distributing the processes required for personal identification over the different devices.

Furthermore, when the settlement process is complete, the fingerprint data is deleted from both the fingerprint sampler and the noncontact IC card reader so as to prevent the leakage of personal information.

In addition, the portable telephone is mounted with a noncontact IC card means so as to reduce the burden of being connected with an external device.

Thus, the present invention has an object of providing an electronic settlement system with high security and excellent operating performance.

The electronic settlement system of the present invention comprises: a portable telephone mounted with a noncontact IC card means and a data verification means; a noncontact IC card reader; and a personal identification data sampler connected to the noncontact IC card reader, wherein the personal identification data sampler samples personal identification data, the noncontact IC card reader transmits the personal identification data to the portable telephone, the portable telephone compares the personal identification data thus received with prestored verification data, and transmits the verification result to the noncontact IC card reader, and the noncontact IC card reader performs a settlement process based on the verification result.

This structure can reduce the burden of the user to operate a portable telephone for electronic settlement and ensure the reliability of the electronic settlement system.

The portable telephone of the present invention used in the electronic settlement system comprises: a communication section for performing noncontact communication with an external device; a verification data storage section for storing verification data; a verification section for comparing personal identification data received by the noncontact communication with the verification data; an identification result output section for transmitting the verification result to the external device; and a transmitter for transmitting settlement information in response to a settlement request from the external device.

This structure enables the portable telephone to easily access an external device so as to receive the sampled fingerprint data when the user uses the electronic settlement system. The structure also enables the portable telephone to perform fingerprint verification therein without outputting the stored verification data to the external device, so that the electronic payment can be performed simply and safely.

The portable telephone of the present invention used in the electronic settlement system may further comprise: a settlement information storage section for storing the settlement information therein; and a display section for displaying the settlement information stored.

This structure enables the user to check payment information such as the details of transaction, the transaction history and the balance if necessary.

In the portable telephone of the present invention used in the electronic settlement system, the verification data storage section may be a detachable storage medium.

This structure enables the user to detach data necessary for personal identification. When replacing the portable telephone, the user has no need for the re-entry of personal identification data or data transmission. The user can also share the portable telephone with other users.

In the portable telephone of the present invention used in the electronic settlement system, data input section to the verification data storage section may be performed by noncontact communication.

This structure can eliminate the need for a connection cable connected to a personal identification sampler and allows the verification data to be inputted easily and safely without using a network connection.

In the portable telephone of the present invention used in the electronic settlement system, data input to the verification data storage section may be performed via a connection cable.

This structure ensures high-speed input of verification data from a personal identification sampler to the portable telephone.

In the portable telephone of the present invention used in the electronic settlement system, the personal identification data and the verification data may be fingerprints.

This structure can minimize the size of the sampling means of a personal identification sampler and facilitate the sampling of the personal identification data, thereby quickening personal identification.

The noncontact IC card reader of the present invention used in the electronic settlement system comprises: a sampler connection section connected to a personal identification data sampler; a personal identification data storage section for storing the personal identification data; a communication section for performing noncontact communication with a portable telephone; a settlement section for performing electronic settlement according to a verification result obtained from the portable telephone; a delete section for deleting the personal identification data; and an external-device connection section connected to an external device.

This structure can avoid information leakage by performing personal identification on the spot using a means for deleting the sampled personal identification data and without using a network connection. In this structure, the user can make settlement only when the sampled personal identification data has been verified. In addition, the user can transmit and receive predetermined settlement information other than personal identification data such as membership number, settlement amount, and received data via a network connection. This is done by accessing the server of a financial institution like a credit card company, using a means for accessing an external device. As a result, reliable electronic settlement is achieved.

The noncontact IC card reader of the present invention used in the electronic settlement system may be integrated with the personal identification data sampler.

This structure can eliminate the need for a connection interface or a transmission process, thereby saving space and quickening settlement process.

The noncontact IC card reader of the present invention used in the electronic settlement system may encrypt the personal identification data and transmit the personal identification data by noncontact communication.

This structure provides for wiretapping prevention when personal identification data is transmitted by noncontact communication.

In the noncontact IC card reader of the present invention used in the electronic settlement system, the personal identification data may be a fingerprint.

This structure can minimize the size of the sampling means of the personal identification sampler and facilitate the sampling of the personal identification data, thereby quickening personal identification.

In a personal identification data sampler of the present invention used in the electronic settlement system, the personal identification data which has been sampled is deleted from a storage section in the personal identification data sampler when outputted to the portable telephone.

This structure can prevent information leakage due to the failure of the personal identification data sampler, the fraudulent use of personal information by the third party, or the like.

In the personal identification data sampler of the present invention used in the electronic settlement system, the personal identification data which has been sampled is deleted from a storage section in the personal identification data sampler upon being informed of completion of a settlement process from the portable telephone.

This structure enables personal identification data to be transmitted again when the portable telephone fails to receive the data by noncontact communication and to be deleted when the settlement process is complete. This can prevent information leakage due to the failure of the personal identification data sampler, the fraudulent use of personal information by the third party, or the like.

In the personal identification data sampler of the present invention used in the electronic settlement system, the personal identification data is a fingerprint.

This structure can minimize the size of the sampling means of the personal identification sampler and facilitate the reading of the personal identification data, thereby quickening personal identification.

As described hereinbefore, the electronic settlement system of the present invention using a portable telephone can prevent the leakage of personal information because the verification data previously stored in the portable telephone is never transmitted to an external device. Furthermore, the sampling of personal identification data by a personal identification data sampler installed in a shop can solve the problems of unauthorized use such as the fraudulent conversion of the portable telephone or forgery of personal identification data. This results in the provision of a simple and safe electronic settlement system for both the user and the shop.

### BRIEF DESCRIPTION OF THE DRAWINGS

Fig. 1 is a system configuration diagram showing an electronic settlement system of a first embodiment of the present invention.
Fig. 2 is a diagram showing a fingerprint verification means in a portable telephone of the first embodiment of the present invention.
Fig. 3A is a system configuration diagram showing a method for registering personal identification data in the first embodiment of the present invention.
Fig. 3B is a system configuration diagram showing the method for registering personal identification data using a detachable storage medium in the first embodiment of the present invention.
Fig. 3C is a system configuration diagram showing the method for registering personal identification data by noncontact communication in the first embodiment of the present invention.
Fig. 4 is a system configuration diagram showing an electronic settlement system of the first embodiment of the present invention.
Fig. 5 is a sequence diagram in a case where the compared fingerprint data agree with each other in the first embodiment of the present invention.
Fig. 6 is a sequence diagram in a case where the compared fingerprint data disagree with each other in the first embodiment of the present invention.
Fig. 7 is a sequence diagram of a second embodiment of the present invention.

### DETAILED DESCRIPTION OF PREFERRED EMBODIMENTS

Best modes to carry out the present invention will be described as follows with reference to drawings.

### FIRST EXEMPLARY EMBODIMENT

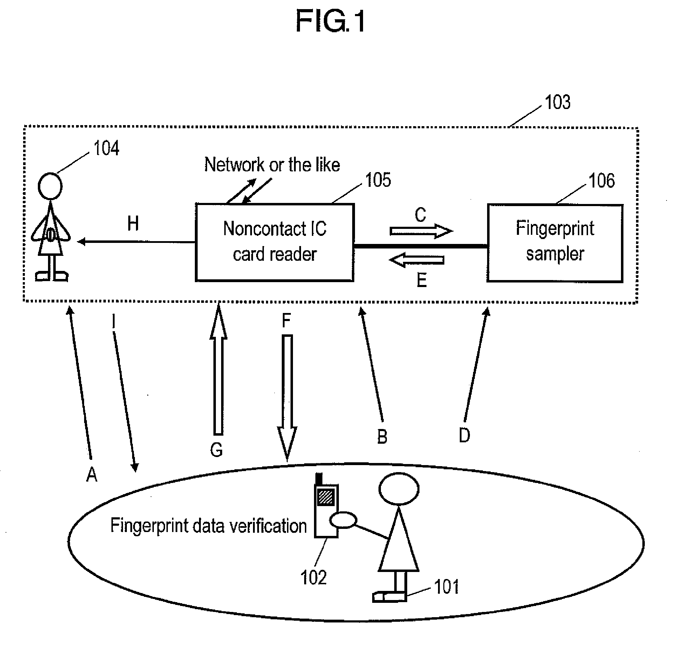

Fig. 1 is an overall structure of an electronic settlement system of a first embodiment using a portable telephone.

In Fig. 1, user 101 purchases an article of commerce from salesperson 104 in shop 103 using portable telephone 102 which is charged with prepaid electronic money. In shop 103, noncontact IC card reader 105 is connected to fingerprint sampler 106, which is a personal identification data sampler. Noncontact IC card reader 105 has an external interface for accessing a network or an information device so as to be connected to the server of a financial institution or the like through the network.

When purchasing an article (arrow A), user 101 chooses prepaid as the method of payment (arrow B) using noncontact IC card reader 105. When the payment method is thus designated, noncontact IC card reader 105 instructs fingerprint sampler 106 to sample a fingerprint (arrow C). When a fingerprint of user 101 is sampled (arrow D), fingerprint sampler 106 transmits the fingerprint data to noncontact IC card reader 105 (arrow E). When user 101 selects the noncontact operation mode in portable telephone 102 for noncontact connection with noncontact IC card reader 105, portable telephone 102 receives the sampled fingerprint data (arrow F). In portable telephone 102, the fingerprint data prestored for verification and the received fingerprint data are compared with each other, and the verification result is transmitted to noncontact IC card reader 105 (arrow G). Noncontact IC card reader 105 displays the verification result (arrow H), and makes a settlement request to portable telephone 102 based on the verification result. When the settlement process is complete, salesperson 104 hands over the article to user 101 (arrow I). Thus, the user can purchase an article easily and safely through electronic settlement.

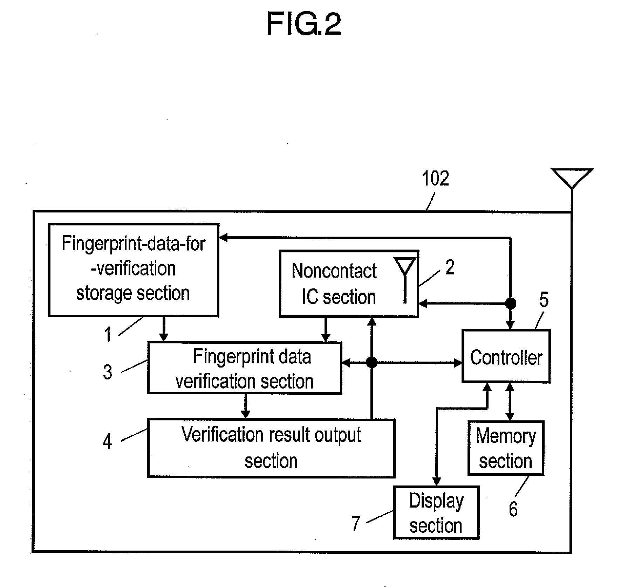

The following is a description of a means for verifying fingerprint data in portable telephone 102 of the first embodiment of the present invention with reference to Fig. 2. The portable telephone shown in Fig. 2 actually includes a wireless transceiver, a voice processor, and a speaker; however, the illustration and description of these components will be omitted.

In Fig. 2, the means for verifying fingerprint data in portable telephone 102 includes fingerprint-data-for-verification storage section 1, noncontact IC section 2, fingerprint data verification section 3, verification result output section 4, controller 5, memory section 6, and display section 7. Fingerprint-data-for-verification storage section 1 is a verification data storage section for storing the previously obtained fingerprint data for verification. Noncontact IC section 2 is a communication section including a noncontact antenna and a reader module having a dedicated CPU, a storage section, and a high frequency circuit for noncontact communication. Fingerprint data verification section 3 is a verification section for verifying the fingerprint data received by noncontact IC section 2 by algorithm analysis. Verification result output section 4 is an identification result output section for outputting the verification result. The previously obtained fingerprint data for verification or personal information may be stored in noncontact IC section 2. In that case, noncontact IC section 2 of portable telephone 102 is mounted with a noncontact IC reader-writer module.

When noncontact IC section 2 receives the fingerprint data, fingerprint data verification section 3 analyzes the received fingerprint data, and takes the fingerprint data from fingerprint-data-for-verification storage section 1 and compares both data. This comparison determines the agreement or disagreement between the fingerprint data of the user who is going to make settlement and the fingerprint data for verification stored in portable telephone 102. When the verification process is complete, verification result output section 4 transmits the verification result to the noncontact IC card reader via noncontact IC section 2 as a transmitter. Controller 5 controls the transmission and reception of data, and memory section 6 stores received data as a settlement information storage section. Display section 7 may display information about services for the user, such as the verification result, the balance information of prepaid money, and the expiration date of the credit card.

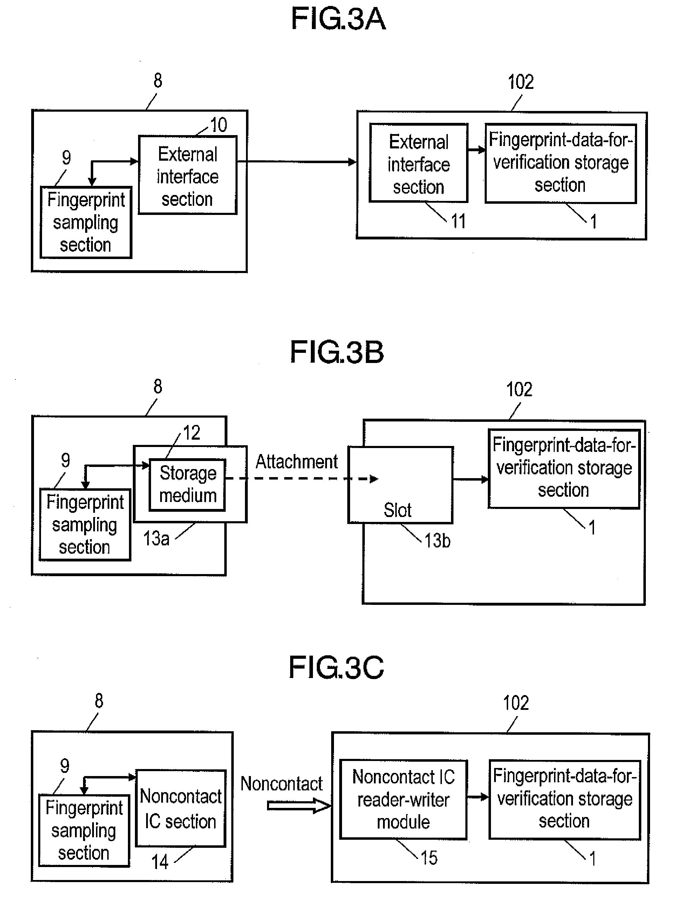

The following is a description about a means for registering fingerprint data for verification to portable telephone 102 in the first embodiment of the present invention with reference to Figs. 3A, 3B and 3C. Registration, which requires personal identification, is performed under control of a telecommunications carrier or the like for security. For example, at the time of signing up for a portable telephone service or replacing a portable telephone with a new model, the new subscriber or the user is required to show a proof of identity such as driver's license. The verification data to be registered may include, besides the fingerprint data, the account number of a financial institution, a credit number, and biometric information depending on the settlement system used.

Figs. 3A, 3B and 3C show the system configuration to register the fingerprint data for verification to the user's portable telephone 102 from fingerprint-data-for-verification sampler 8 installed on the telecommunications carrier side. Fig. 3A is a system configuration using a cable, Fig. 3B is a system configuration using a storage medium, and Fig 3C is a system configuration by noncontact communication.

In Fig. 3A, fingerprint-data-for-verification sampler 8 includes fingerprint sampling section 9 and external interface section 10 which can be connected to portable telephone 102. The user samples his/her fingerprint using fingerprint-data-for-verification sampler 8 and connects portable telephone 102 to fingerprint-data-for-verification sampler 8 with a cable or the like. The sampled fingerprint data is transmitted from fingerprint-data-for-verification sampler 8 to portable telephone 102 and stored in fingerprint-data-for-verification storage section 1.

In Fig. 3B, fingerprint-data-for-verification sampler 8 and portable telephone 102 are mounted with storage media slots 13a and 13b, respectively, such as memory cards. Storage medium 12 containing the sampled fingerprint data for verification by fingerprint sampling section 9 is transmitted to portable telephone 102. As a result, verification data required for electronic settlement can be stored in fingerprint-data-for-verification storage section 1 of portable telephone 102.

In Fig. 3C, fingerprint-data-for-verification sampler 8 is mounted with noncontact IC section 14, whereas portable telephone 102 is mounted with noncontact IC reader-writer module 15. The fingerprint data is transmitted from fingerprint-data-for-verification sampler 8 to portable telephone 1 by noncontact communication. As a result, the verification data required for electronic settlement can be stored in fingerprint-data-for-verification storage section 1 of portable telephone 102.

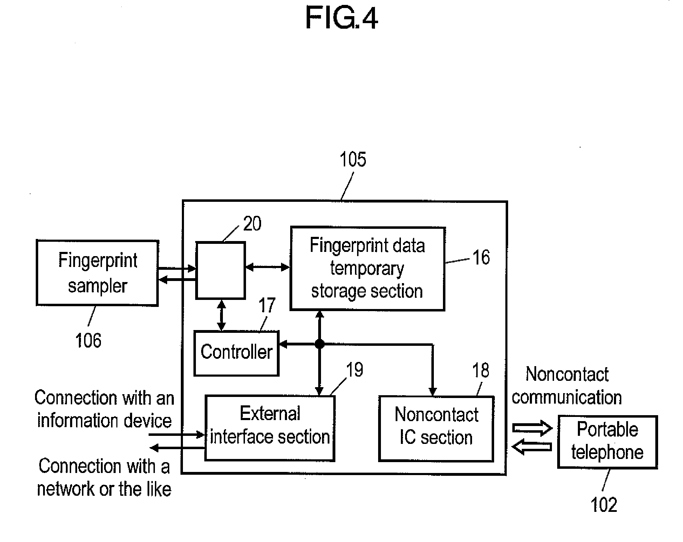

Fig. 4 shows the internal structure of the noncontact IC card reader and the signal flow between fingerprint sampler 106 and portable telephone 102 in the first embodiment of the present invention.

In Fig. 4, noncontact IC card reader 105 includes fingerprint data temporary storage section 16 as a personal identification data storage section, controller 17, noncontact IC section 18 as a communication section, external interface section 19 as an external-device connection section, and fingerprint sampler interface section 20 as a sampler connection section. Fingerprint data temporary storage section 16 temporarily stores fingerprint data received from fingerprint sampler 106 via fingerprint sampler interface section 20. Then, controller 17 encrypts the fingerprint data, and noncontact IC section 18 transmits it to portable telephone 102. The fingerprint data is stored in fingerprint data temporary storage section 16 until the settlement process is complete. When portable telephone 102 receives a fingerprint verification result by noncontact communication and the result indicates the agreement between the compared fingerprint data, controller 17 requests portable telephone 102 to make payment and receives information necessary for settlement from portable telephone 102 to make settlement. On the other hand, when the result indicates the disagreement between the compared fingerprint data, controller 17 regards that the settlement is impossible and then disconnects communication. When the verification process is complete, controller 17 instructs noncontact card reader 105 and fingerprint sampler 106 to delete the fingerprint data stored therein regardless of whether the compared fingerprint data agree or disagree with each other. This indicates that controller 17 has both a function as a settlement section and a function as a delete section.

In a case of using a settlement service which is required to communicate with the server of a financial institution such as a credit card company, noncontact IC card reader 105 connects external interface section 19 to a network and transmits predetermined settlement information received from portable telephone 102 to the server so as to make settlement. External interface section 19 can be connected to an information terminal such as a personal computer when necessary. The noncontact IC card reader may be integrated with the fingerprint sampler by being provided with a fingerprint sampling means and a processing means mounted on the fingerprint sampler.

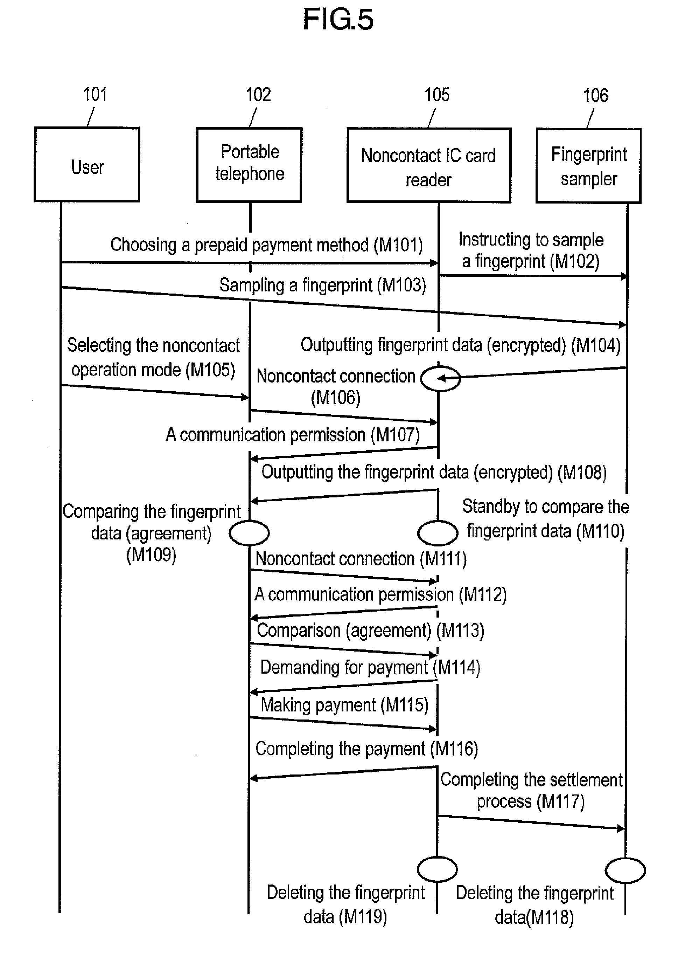

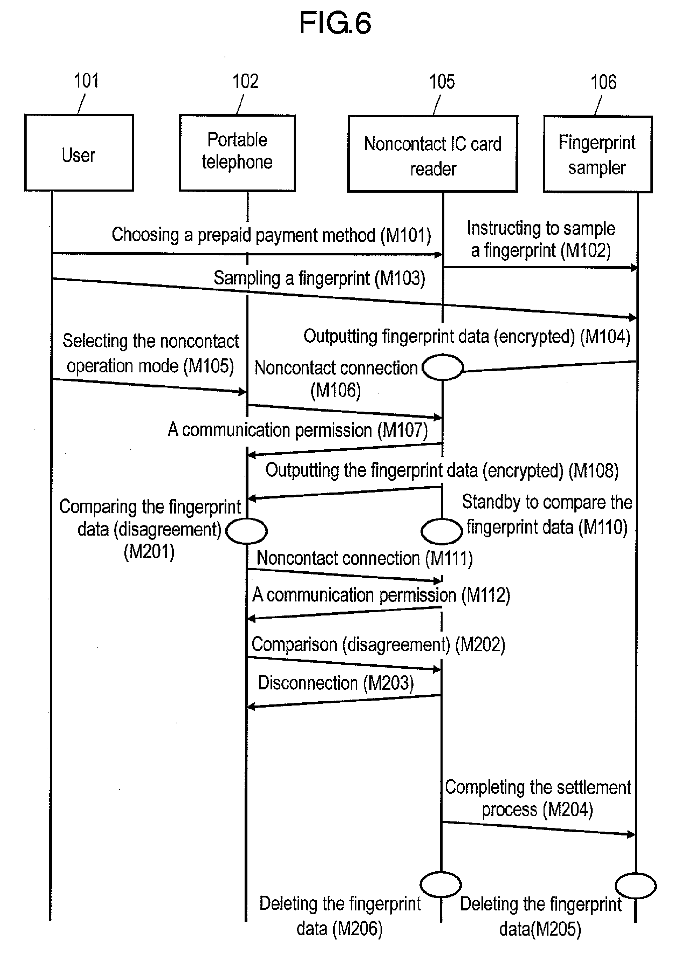

A specific procedure of the electronic settlement system of the first embodiment of the present invention will be described as follows with reference to Figs. 5 and 6.

Fig. 5 is a sequence diagram showing a procedure in which the compared fingerprint data agree with each other when the user 101 purchases an article at a shop by using portable telephone 102 charged with prepaid electronic money.

At the time of settlement, user 101 chooses prepaid as the method of settlement using noncontact IC card reader 105 (M101). When the settlement method is thus designated, noncontact IC card reader 105 instructs fingerprint sampler 106 to sample a fingerprint (M102). When a fingerprint of user 101 is sampled (M103), fingerprint sampler 106 encrypts fingerprint data and transmits it to noncontact IC card reader 105 (M104).

User 101 selects the noncontact operation mode in portable telephone 102 (M105) and connects portable telephone 102 to noncontact IC card reader 105 (M106). Noncontact IC card reader 105 transmits a communication permission to portable telephone 102 (M107) and further transmits the encrypted fingerprint data to portable telephone 102 (M108). Portable telephone 102 compares the received fingerprint data with the fingerprint data prestored for verification (M109). When the compared fingerprint data agree with each other, portable telephone 102 is noncontact connected to noncontact IC card reader 105 (M111) so as to obtain a communication permission (M112), thereby informing noncontact IC card reader 105 of the agreement of the fingerprint comparison (M113).

Noncontact IC card reader 105 is placed in a standby state until the fingerprint verification result is transmitted from portable telephone 102 (M110). Upon detecting the agreement of the fingerprint comparison, noncontact IC card reader 105 demands for payment to portable telephone 102 (M114), and portable telephone 102 makes payment (M115). When the payment is complete, noncontact IC card reader 105 informs portable telephone 102 of the completion of the payment (M116). When the settlement process is all complete, noncontact IC card reader 105 informs fingerprint sampler 106 of the completion of the settlement process (M117). Fingerprint sampler 106 deletes the fingerprint data stored therein (M118). At this moment, noncontact IC card reader 105 also deletes the fingerprint data stored therein (M119).

Fig. 6 is a sequence diagram showing a procedure in which the compared fingerprint data disagree with each other. In Fig. 6, the same processes those in Fig. 5 will be referred to with the same reference symbols as those in Fig. 5 and their description will be omitted.

In portable telephone 102, when the compared data disagree with each other (M201), portable telephone 102 makes a noncontact connection to noncontact IC card reader 105 (M111) so as to obtain a communication permission (M112), thereby informing noncontact IC card reader 105 of the disagreement of the fingerprint comparison (M202). Upon detecting the disagreement of the fingerprint comparison, noncontact IC card reader 105 disconnects the connection with portable telephone 102 (M203). Noncontact IC card reader 105 also informs fingerprint sampler 106 of the completion of the settlement process (M204). Fingerprint sampler 106 deletes the fingerprint data upon being informed of the completion of the settlement process (M205). At this moment, noncontact IC card reader 105 also deletes the fingerprint data stored therein (M206).

In the aforementioned description, a prepaid electronic settlement system is taken up as an example. However, when the user makes settlement which is required to communicate with the server of a credit card company or a financial institution, information required for the settlement can be transmitted and received by wireless connection of the portable telephone. For example, portable telephone 102 can receive data such as transaction history data and receipt data by ordinary wireless connection instead of noncontact communication. Furthermore, in the aforementioned description, personal identification is performed using fingerprint data; however, the present invention is not limited to this structure and can be applied to anything that can perform personal identification. For example, it is possible to use biometric information such as iris patterns, retinal vascular patterns, vein patterns, and voice prints.

### SECOND EXEMPLARY EMBODIMENT

An electronic settlement system of a second embodiment of the present invention using a portable telephone will be described as follows.

In the second embodiment of the present invention, when the compared fingerprint data disagree with each other, a noncontact IC card reader displays the negative verification result and deletes the sampled fingerprint data, but does not disconnect the noncontact communication with the portable telephone. The noncontact IC card reader also displays an instruction for the user to re-enter a fingerprint, and instructs the fingerprint sampler to sample the fingerprint again so as to continue the identification process.

In the present embodiment, at the time of making settlement, if the user fails to read his/her fingerprint or to identify himself/herself due to a failure in operating the portable telephone, the fingerprint sampling can be performed again as follows without returning to the start of the operation of the portable telephone. The user can follow an instruction on display to re-enter the fingerprint, thereby continuing the identification process.

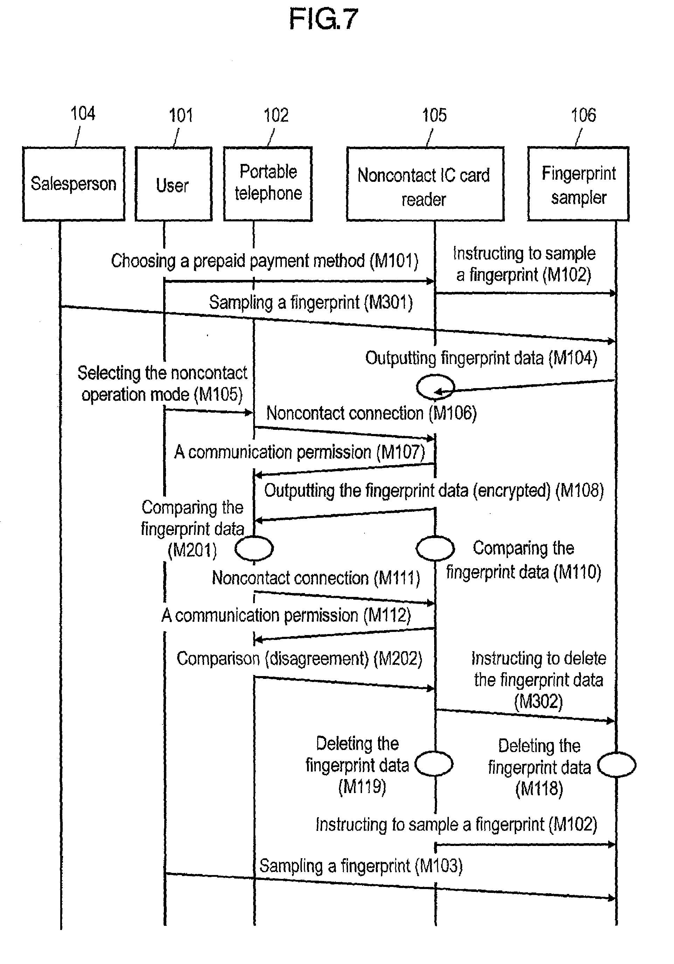

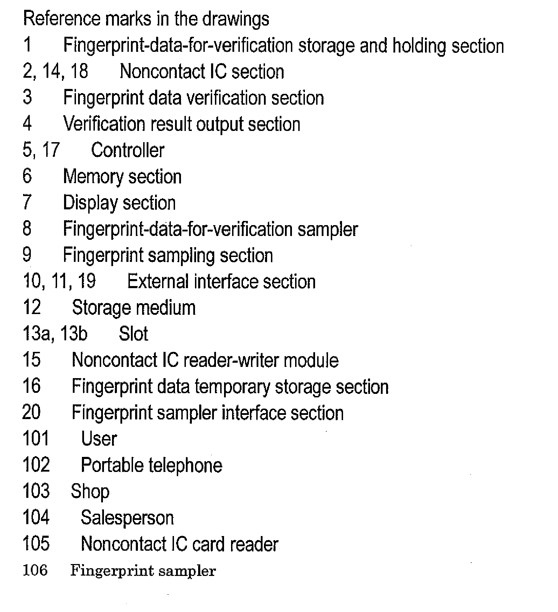

In the present embodiment, before making settlement, the salesperson can easily check whether the user's portable telephone operates correctly or not. The checking operation will be described as follows with reference to Fig. 7.

Fig. 7 is a sequence diagram showing a procedure of the checking operation before making settlement. In Fig. 7, the same processes as those in Figs. 5 and 6 will be referred to with the same reference symbols as those in Figs. 5 and 6, and their description will be omitted.

As the checking operation before making settlement shown in Fig. 7, salesperson 104 samples his/her fingerprint using fingerprint sampler 106 (M301). Fingerprint sampler 106 transmits the fingerprint data of salesperson 104 to noncontact IC card reader 105 (M104). User 101 who is going to make settlement selects the noncontact operation mode in his/her portable telephone 102 (M105) and makes a noncontact connection to noncontact IC card reader 105 (M106) so as to receive the fingerprint data of salesperson 104 (M108). In user's portable telephone 102, the user's fingerprint data is stored as the fingerprint data for verification, so that the portable telephone that is operating correctly transmits the negative verification result to noncontact IC card reader 105 (M202). Noncontact IC card reader 105 displays the verification result. At this moment, noncontact IC card reader 105 instructs fingerprint sampler 106 to delete the fingerprint data (M302), and fingerprint sampler 106 deletes the fingerprint data stored therein (M118). Also, noncontact IC card reader 105 deletes the fingerprint data stored therein (M119). Thus, the checking operation is complete. Next, noncontact IC card reader 105 displays an instruction for the user to re-enter his/her fingerprint, and instructs fingerprint sampler 106 to sample the fingerprint (M102). User 101 samples his/her fingerprint using fingerprint sampler 106 (M103), and performs fingerprint identification and a settlement process. After this, the same processes as those described in Fig. 5 will be performed.

As a result of the aforementioned operations, legitimacy can be easily confirmed with respect to both the user's portable telephone and the noncontact IC card reader installed in a shop. This enables a large settlement to be made without causing anxiety to the user and the shop.

### INDUSTRIAL APPLICABILITY

In the electronic settlement system of the present invention using a portable telephone, there is no leakage of personal information from the portable telephone or unauthorized use such as the fraudulent conversion of the portable telephone or forgery of identification data. This makes the electronic settlement simple and safe for both the user and the shop. Thus, the electronic settlement system is useful as an electronic settlement system that requires high reliability. Using the portable telephone for personal identification allows the user to use a variety of electronic settlement services. This eliminates the need for the user to bring an IC card for each service, making the electronic settlement system useful as an alternative to IC card settlement system.

## Claims

1. An electronic settlement system comprising:
a portable telephone mounted with a noncontact IC card means and a data verification means;
a noncontact IC card reader; and
a personal identification data sampler connected to the noncontact IC card reader, wherein
the personal identification data sampler samples personal identification data,
the noncontact IC card reader transmits the personal identification data to the portable telephone,
the portable telephone compares the personal identification data thus received with prestored verification data, and transmits a verification result to the noncontact IC card reader, and
the noncontact IC card reader performs a settlement process based on the verification result.

2. A portable telephone used in an electronic settlement system, the portable telephone comprising:
a communication section for performing noncontact communication with an external device;
a verification data storage section for storing verification data;
a verification section for comparing personal identification data received by the noncontact communication with the verification data;
an identification result output section for transmitting a verification result to the external device; and
a transmitter for transmitting settlement information in response to a settlement request from the external device.

3. The portable telephone of claim 2 further comprising:
a settlement information storage section for storing the settlement information therein; and
a display section for displaying the settlement information stored.

4. The portable telephone of claim 2 or 3, wherein
the verification data storage section is a detachable storage medium.

5. The portable telephone of claim 2 or 3, wherein
data input section to the verification data storage section is performed by noncontact communication.

6. The portable telephone of claim 2 or 3, wherein
data input to the verification data storage section is performed via a connection cable.

7. The portable telephone of claim 2 or 3, wherein
the personal identification data and the verification data are fingerprints.

8. A noncontact IC card reader used in an electronic settlement system, the noncontact IC card reader comprising:
a sampler connection section connected to a personal identification data sampler;
a personal identification data storage section for storing the personal identification data;
a communication section for performing noncontact communication with a portable telephone;
a settlement section for performing electronic settlement according to a verification result obtained from the portable telephone;
a delete section for deleting the personal identification data; and
an external-device connection section connected to an external device.

9. The noncontact IC card reader of claim 8 being integrated with the personal identification data sampler.

10. The noncontact IC card reader of claim 8 encrypting the personal identification data and transmitting the personal identification data by noncontact communication.

11. The noncontact IC card reader of claim 8, wherein
the personal identification data is a fingerprint.

12. A personal identification data sampler used in the electronic settlement system of claim 1, wherein
the personal identification data which has been sampled is deleted from a storage section in the personal identification data sampler when outputted to the portable telephone.

13. A personal identification data sampler used in the electronic settlement system of claim 1, wherein
the personal identification data which has been sampled is deleted from a storage section in the personal identification data sampler upon being informed of completion of a settlement process from the portable telephone.

14. A personal identification data sampler used in the electronic settlement system of claim 1, wherein
the personal identification data is a fingerprint.
